# EUROPEAN PATENT APPLICATION

(11) **EP 3 381 789 A1**
(43) Date of publication of application: **03.10.2018**
(21) Application number: 17705005.1
(22) Date of filing: 21.02.2017
(51) Int. Cl.: B63B 39/12, E01D 19/10, G01C 13/00, G05D 1/00, G01B 11/00, B66F 9/06, G03B 17/56, H04N 5/225

(54) **VESSEL DRAFT OBSERVATION APPARATUS**

(30) Priority: 17.02.2017 KR 20170021797
(71) Applicant: Kim, Tae Hwan, Bundang-gu Seongnam-si Gyeonggi-do 13492 (KR)
(72) Inventor: KIM, Tae Hwan, Gyeonggi-do 13492 (KR); KIM, Moo Keyom, Busan 49110 (KR)
(74) Representative: St Clair Jones, Gregory Arthur Langley
(86) International application number: PCT/KR2017/001889
(87) International publication number: WO 2018/151358

(57) **Abstract**

The present disclosure provides an apparatus for monitoring a draft of a ship, including a camera, a descent arm configured to have an adjustably extending multi-stage telescopic structure and have an end coupled with the camera, a descent adjuster configured to adjust an elevation of the camera, and a wire configured to link the descent arm with the descent adjuster wherein an extension of the descent arm and the elevation of the camera are adjusted according to a length of the wire, the length being varied by the descent adjuster.

## Description

### Field of the Invention

The present disclosure in some embodiments relates to an apparatus for monitoring draft of a ship.

### Background of the Invention

The statements in this section merely provide background information related to the present disclosure and may not constitute prior art.

A draft represents the depth of an immersed portion of a ship operating in water, i.e., the vertical distance measured from the ship's hull or keel at the waterline to the bottom of the keel. A full load draft is the maximum draft to which the ship may be loaded with passengers and cargo while ensuring a safe navigation, and therefore the full load draft is safely controlled by stipulating the weight limit to passengers or cargo. Different drafts are applicable to a single ship according to waters to sail, the seasons and the weather conditions, and the drafts need to be checked depending on the circumstances of the voyage against exceeding the full load draft. In other words, there is a need for an operation of confirming the draft at regular time intervals.

Conventionally, a worker climbed down a ladder in person to confirm the draft with the naked eyes. This has exhausted the worker climbing up and down a ladder, leading to higher risk of the exhausted worker to fall in the fierce marine environment with a high wind. Moreover, according to the conventional draft monitoring method, an accurate measurement of draft is obtained only when the ship is on the berth, failing to accurately check the real-time draft during sailing.

A solution to this inability is disclosed by Korean patent application publication No. 2015-0062550 entitled Draft Measuring Apparatus of Ship wherein a camera attached to wires is lowered to measure the draft of a ship. It has merits to save the worker from the imminent duty of climbing down a ladder. However, the strong wind blowing in the marine environment easily overpowers the camera wires to rotate or oscillate the camera around or side to side, interfering an accurate observation of the draft.

Therefore, at least one embodiment of the present disclosure seeks to provide a ship's draft monitoring apparatus incorporating a descent arm for enclosing a wire to prevent a camera rotation or a camera shake due to the marine environment in view of the deficiencies of the above-mentioned prior art of Korean patent application publication No. 2015-0062550.

### SUMMARY OF THE INVENTION

The present disclosure in some embodiments provides a ship's draft monitoring apparatus, including a camera, a descent arm, a descent adjuster, and a wire. The descent arm is configured to have an adjustably extending multi-stage telescopic structure and have an end coupled with the camera. The descent adjuster is configured to adjust an elevation of the camera. And the wire is configured to link the descent arm with the descent adjuster wherein an extension of the descent arm and the elevation of the camera are adjusted according to a length of the wire, the length being varied by the descent adjuster.

Additional embodiments of the disclosure will be set forth, in part, in the following description, and in part will be derived from the detailed description or can be learned by practicing the present disclosure.

The general description given above and the following detailed description are merely illustrative and explanatory and are not restrictive of the disclosure as claimed.

### Effect of the Invention

With the ship's draft monitoring apparatus according to some embodiments of the present disclosure, a camera is linked with a descent arm that is a rigid body, thereby preventing rotation or movement of the camera to facilitate the draft observation.

Further, according to some embodiments of the present disclosure, a descent arm is made of a plurality of hollow tubes each having a constant diameter in a multi-stage telescopic structure, to provide the effect of extending the life of the descent arm.

Further, the descent arm of some embodiments is provided with a tailpiece and a wire linked with the tailpiece which cooperate to prevent the rotation of the camera and effectuate facilitating the draft observation.

Further, according to some embodiments of the present disclosure, a fisheye lens is used to capture a panoramic image for a user to observe the correct draft free of distortion with virtual reality goggles.

### BRIEF DESCRIPTION OF THE DRAWINGS

The above and other objects, features and advantages of some embodiments will be more apparent from the following detailed description taken in conjunction with the accompanying drawings, in which:
FIG. 1 is a perspective view of a ship's draft monitoring apparatus according to some embodiments of the present disclosure.
FIG. 2 is a schematic diagram showing the connection relationship between a descent arm and a bridge of a ship's draft monitoring apparatus according to another embodiment of the present disclosure.
FIGs. 3A and 3B are schematic views showing a ship's draft monitoring apparatus according to another embodiment operating in different situations.
FIG. 4 is a perspective view of a descent arm of a ship's draft monitoring apparatus according to some embodiments.
FIG. 5 is a side sectional view of a descent arm of a ship's draft monitoring apparatus according to some embodiments.
FIGs. 6A to 6C are perspective views of different descent arms of a ship's draft monitoring apparatus, according to some embodiments.
FIG. 7 is a perspective view of tailpieces being coupled to a descent arm in a ship's draft monitoring apparatus according to some embodiments.
FIG. 8 is a plan view of the tailpieces of the ship's draft monitoring apparatus according to some embodiments.
FIG. 9 is a perspective view of a bridge of a ship's draft monitoring apparatus according to some embodiments.
FIG. 10 is a perspective view of an exemplary attachment for mounting the ship's draft monitoring apparatus according to some embodiments.
FIG. 11 is a perspective view of another exemplary attachment for mounting the ship's draft monitoring apparatus according to some embodiments.
FIG. 12 is a side sectional view for illustrating the interior of another exemplary attachment of the ship's draft monitoring apparatus according to some embodiments.

### REFERENCE NUMERALS

| | |
|---|---|
| 10: Ship's draft monitoring apparatus | |
| 100: Camera | 200: Descent arm |
| 300: Bridge | 400: Descent adjuster |
| 500: Wire | 600: Tailpiece |
| 700a, 700b: Attachment | |
| 800: Retractable reel | |

### DETAILED DESCRIPTION OF THE INVENTION

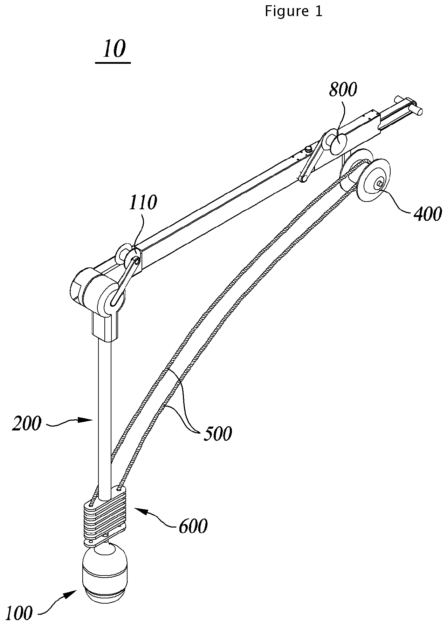

Hereinafter, some embodiments of the present disclosure will be described in detail with reference to the accompanying drawing, FIGs. 1 to 12.

In the following description of the at least one embodiment, a detailed description of known functions and configurations incorporated herein will be omitted for the purpose of clarity and for brevity.

FIG. 1 is a perspective view of a ship's draft monitoring apparatus according to some embodiments of the present disclosure.

Referring to FIG. 1, a ship's draft monitoring apparatus 10 according to some embodiments include a camera 100, a descent arm 200, a bridge 300, a descent adjuster 400, a wire 500 and a tailpiece 600.

The camera 100 may be coupled to one end of the descent arm 200 having the other side coupled to one end of the bridge 300. The bridge 300 and the descent arm 200 may be rotatably interconnected. At the other end of the bridge 300, the descent adjuster 400 may be disposed. The wire 500 may extend between the descent adjuster 400 and the tailpiece 600 coupled to the outer peripheral surface of the descent arm 200. The descent adjuster 400 may be a rotating reel. A manual rotation of the descent adjuster 400 adjusts the length of wire 500, and in turn the elevation of the camera 100. At the same time, the length of the descent arm 200 may be adjusted. Operating the descent adjuster 400 to increase the length of the wire 500 will extend the descent arm 200 under gravity and lower the camera 100 at the same time. Reducing the length of the wire 500 will retract the descent arm 200 and elevate the camera 100.

The ship's draft monitoring apparatus 10 according to the present disclosure may further include a pulley 110 and a retractable reel 800. The power line connected to the camera 100 may run through the interior of the descent arm 200 to reach the pulley 110. The power line may extend to be wound and secured around the retractable reel 800. When the aforementioned manual rotation of the descent adjuster 400 adjusts the length of wire 500 and in turn the extension of the descent arm 200 as well as the elevation of the camera 100, the power line to the camera 100 is accordingly adjusted.

The retractable reel 800 may be coupled to an attachment 700a which is a securing mechanism for the ship's draft monitoring apparatus 10. The retractable reel 800 may be coupled to the bridge 300 at its body 310.

The descent adjuster 400 may be operated manually as described above, but it may also be automatically operated with an electric motor and a controller added.

The descent adjuster 400 may further include an electric motor, a controller, and a casing. The shaft of the motor may be linked with the rotating reel of the descent adjuster 400 where the wire 500 is wound, so as to rotate the rotating reel. The controller may be connected to the electric motor to operate the electric motor.

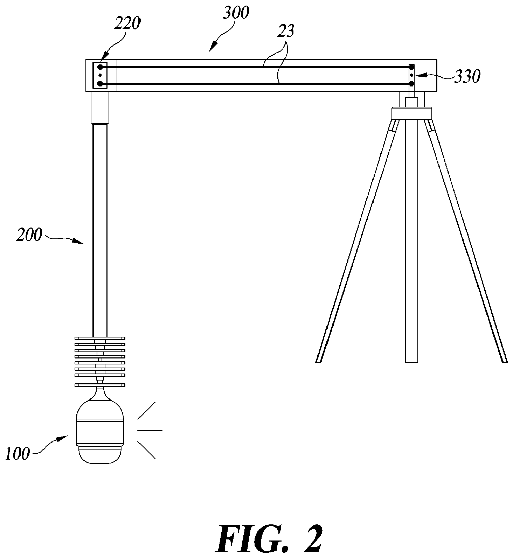

FIG. 2 is a schematic diagram showing the connection relationship between a descent arm and a bridge of a ship's draft monitoring apparatus according to another embodiment of the present disclosure.

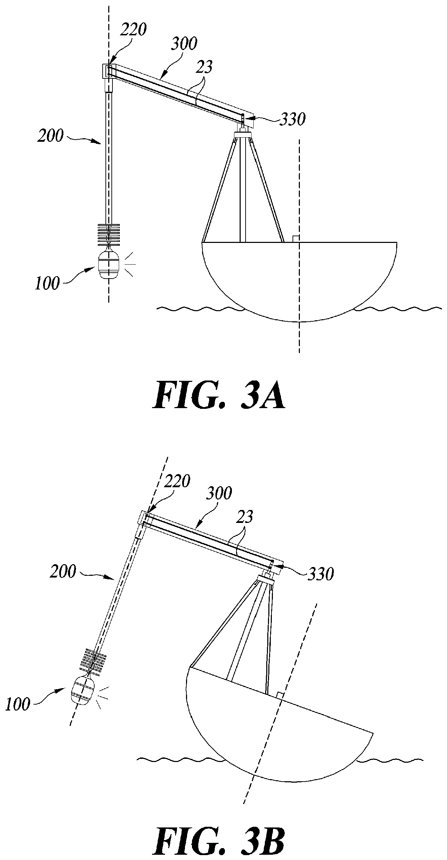

FIGs. 3A and 3B are schematic views showing a ship's draft monitoring apparatus according to another embodiment operating in different situations. The ship and the ship's draft monitoring apparatus 10 in FIG. 3 are not drawn to scale, but exaggerated to help understanding the present disclosure.

Referring to FIG. 2, in the ship's draft monitoring apparatus according to another embodiment of the present disclosure, the descent arm 200 may incorporate a first bracket 220. The bridge 300 may incorporate a second bracket 330. In addition, the descent arm 200 and the bridge 300 may include a linkage 23 therein for connecting their first bracket 220 and second bracket 330.

The first bracket 220 may be disposed on a portion where the descent arm 200 is rotatably coupled to the bridge 300. The first bracket 220 may be fixedly coupled to the inside of the descent arm 200, while it may be rotatably coupled to the bridge 300.

The second bracket 330 may be fixedly coupled to the inside of the bridge 300.

The linkage 23 is capable of maintaining a constant length. The linkage 23 may be attached at one end rotatably to the first bracket 220. The other end of the linkage 23 may be attached rotatably to the second bracket 330. At least one linkage 23 or more of them are installed. The linkage 23 may be made by any known material, for example, iron wire, plastic or such rigid body.

With the first bracket 220, the second bracket 330 and the linkage 23, when the bridge 300 and the attachment are articulated to vary the angle of the bridge 300 as shown in the FIG. 3A, the camera 100 and the descent arm 200 can keep a predetermined distance from the ship, resisting any push away from the ship. In addition, when the ship is tilted as shown in FIG. 3B, the camera 100 and the descent arm 200 can resist a pull toward the ship to keep a certain safe distance therefrom. That is, the vertical axes passing through the respective centers of the descent arm 200 and the ship may be constantly maintained parallel to each other. Accordingly, the camera 100 can keep a certain distance between the ship to facilitate observation of the draft of the vessel.

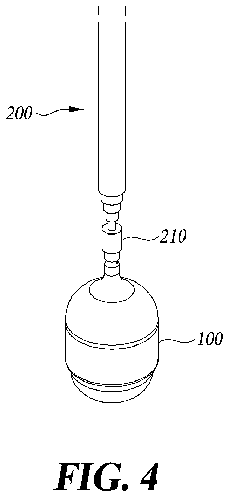

FIG. 4 is a perspective view of a descent arm of a ship's draft monitoring apparatus according to some embodiments.

Referring to FIG. 4, the descent arm 200 may be composed of a plurality of hollow tubes arranged in a multi-stage telescopic structure. In addition, a connector 210 may be additionally provided for interconnecting the descent arm 200 and the camera 100.

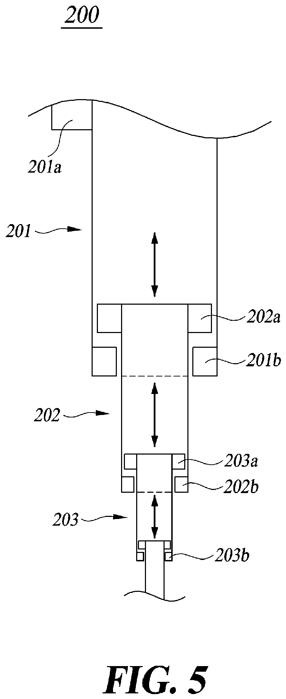

FIG. 5 is a side sectional view of a descent arm of a ship's draft monitoring apparatus according to some embodiments.

Referring to FIG. 5, the descent arm 200 is constituted by a plurality of hollow tubes 201, 202, 203, etc. in a multi-stage telescopic structure. The hollow tubes having different diameters are arranged in the multi-stage telescopic structure. Although three hollow tubes are illustrated, the number thereof is not so limited.

Each of the plurality of hollow tubes 201, 202 and 203 may be formed with an outer peripheral step 201a, 202a and 203a and an inner peripheral step 201b, 202b and 203b. When the whole length of the descent arm 200 increases, the hollow tube 203 slidingly descends inside of the hollow tube 202 while the outer peripheral step 203a of the hollow tube 203 slides down until it contacts the inner peripheral step 202b of the hollow tube 202. Further, the hollow tube 202 may slidingly descend inside of the hollow tube 201 until the outer peripheral step 202a of the hollow tube 202 reaches the inner peripheral step 201b of the hollow tube 201.

Each of the hollow tubes has a constant diameter. In other words, different from TV or radio antennas, fishing rods, camera monopods or selfie sticks, and the like, each of the hollow tubes is not structured to decrease in diameter toward either end thereof. The hollow tube 203 is not inserted in the hollow tube 202. The hollow tube 203 and the hollow tube 202 have their outer peripheral step 203a and inner peripheral step 202b meet with a gap maintained to allow some degree of play.

This significantly reduces the pressure applied in the radial direction of each hollow tube to prolong the life of the descent arm 200. Further, when the descent adjuster 400 is manipulated to draw in the wire 500, the descent arm 200 may be retracted against gravity.

The plurality of hollow tubes may be made of any known material, for example, synthetic plastic resin, stainless steel, iron, or synthetic rubber material.

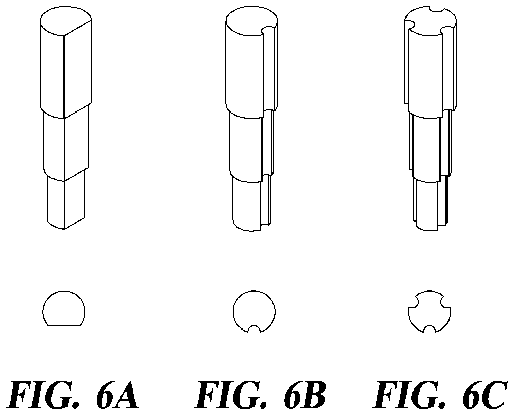

FIGs. 6A to 6C are perspective views of different descent arms of a ship's draft monitoring apparatus, according to some embodiments.

Referring to FIGs. 6A to 6C, the descent arm 200 may comprise one of different hollow tubes having, for example, a circular cross-section with a truncated edge as shown in FIG. 6A, a circular cross-section with a recess as shown in FIG. 6B, and a circular cross-section with a plurality of recesses as shown in FIG. 6C. The respective hollow tubes with constant diameters are not held tightly by pinching each other and they are urged to revolve under the influence of the wind that blows from the sea. When the cross sections of the respective hollow tubes of the descent arm 200 formed as shown in FIGs. 6A to 6C, each hollow tube is prevented from rotating, and the camera 100 attached to such descent arm 200 can be prevented from rotating. This facilitates to observe the draft of the ship.

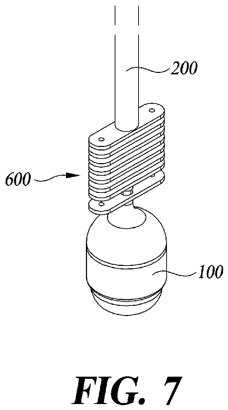

FIG. 7 is a perspective view of tailpieces being coupled to the descent arm in a ship's draft monitoring apparatus according to some embodiments.

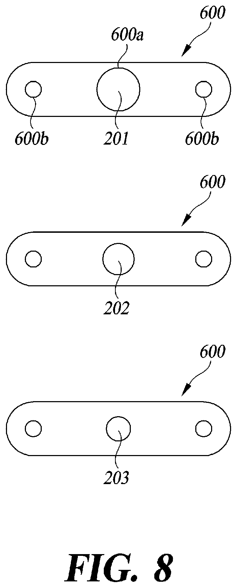

FIG. 8 is a plan view of the tailpieces of the ship's draft monitoring apparatus according to some embodiments.

Referring to FIG. 7, the tailpiece 600 may be coupled to the outer peripheral surface of the descent arm 200. The tailpiece 600 may either be singular or multiple. A plurality of tailpieces 600 may be respectively coupled to the outer peripheral surfaces of the plurality of hollow tubes of the descent arm 200.

Referring to FIG. 8, the tailpiece 600 is made of a flat plate having a through hole 600a formed centrally thereof, and wire holes 600b formed at both longitudinal ends. The hollow tube of the descent arm 200 may be threaded through the hole 600a of the tailpiece 600 to couple the hollow tube with the tailpiece 600. The size of the through-hole 600a may be varied according to the size of the hollow tube to be threaded therethrough. That is, the tailpiece 600 may have through holes 600a sized differently to fit the respectively hollow tubes.

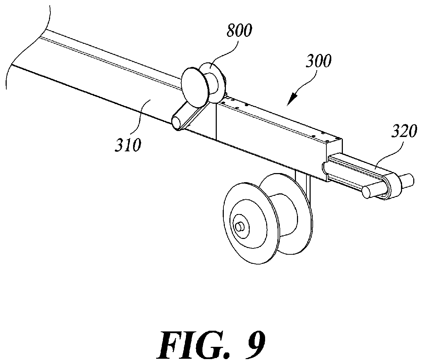

FIG. 9 is a perspective view of the bridge of a ship's draft monitoring apparatus according to some embodiments.

The bridge 300 may include a bridge body 310 and a telescoping bridge section 320. The bridge body 310, which is a hollow member, may receive the telescoping bridge section 320 inserted therein. The bridge body 310 and the telescoping bridge section 320 may be slidably coupled to each other. This enables the bridge 300 to be adjustably extend or retract, so as to adjust the distance between the camera 100 and the ship. The distance between the camera 100 and the ship may be corrected for allowing the accurate observation of the draft.

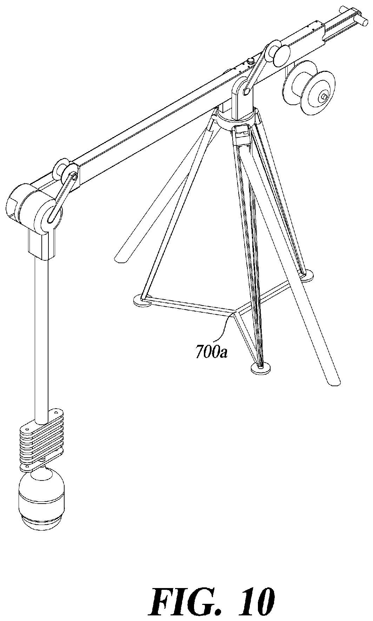

FIG. 10 is a perspective view of an exemplary attachment for mounting the ship's draft monitoring apparatus according to some embodiments.

Referring to FIG. 10, the ship's draft monitoring apparatus according to some embodiments may further include an attachment for mounting thereof. In some embodiments, an attachment 700a may be provided to have a known tripod shape. The attachment 700a is coupled at its upper side to the body 310 of the bridge 300, to support and fix the ship's draft monitoring apparatus 10 on the ship. As illustrated in FIGs. 2 and 3, the other end of the bridge 300 may be rotatably coupled with the attachment 700a. Alternatively, the attachment 700a may be rotatably coupled to the center of the bridge 300.

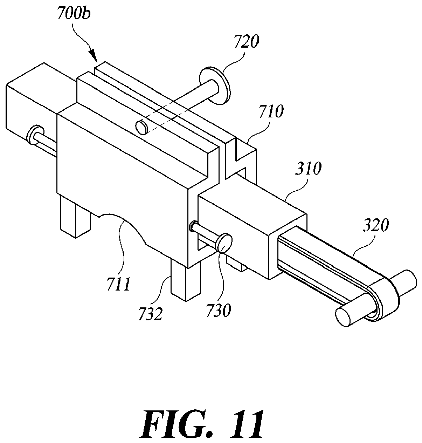

FIG. 11 is a perspective view of another exemplary attachment for mounting the ship's draft monitoring apparatus according to some embodiments.

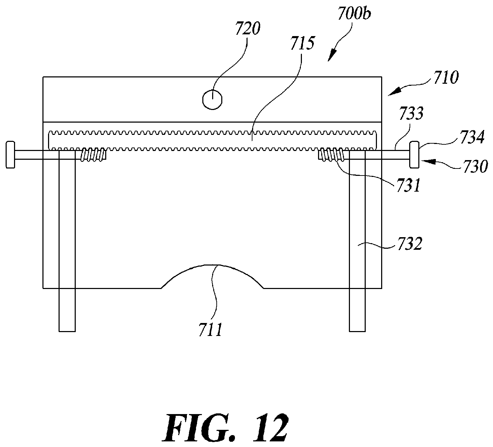

FIG. 12 is a side sectional view for illustrating the interior of another exemplary attachment of the ship's draft monitoring apparatus according to some embodiments.

Referring to FIG. 11, an attachment 700b according to another embodiment includes a support bracket 710, a first fastener 720 and at least one second fastener 730.

The support bracket 710 is a hollow member which may have an approximately rectangular and/or convex cross-section, and is centrally threaded with the bridge body 310. The support bracket 710 is coupled so as to surround the body 310 of the bridge 300. The support bracket 710 is slidably coupled to the body 310 of the bridge 300. The support bracket 710 may be properly positioned along the body 310 of the bridge 300 and secured in place by tightening the first fastener 720.

The support bracket 710 includes a recess 711 formed on the lower surface thereof. The recess 711 may be positioned so as to complement a crossbar portion of the fence installed on the deck of the ship. At this time, the present ship's draft monitoring apparatus 10 may be mounted on the fence by operating the second fastener 730 as described later.

The first fastener 720 may be disposed on the protruding upper portions of the support bracket 710. The first fastener 720 operates in the typical fixing method wherein the first fastener 720 is grasped and rotated by its fastening handle to thereby tighten the two upper portions toward each other.

Referring to FIG. 12, the support bracket 710 may have at least one rack gear 715 incorporated in a side wall thereof. The second fastener 730 may include a worm gear 731 arranged to cooperate with the rack gear 715, vice members 732, a rotating shaft 733 and a clamping handle 734. There may be two second fasteners 730, one for each end of the rack gear 715.

The second fasteners 730 and the rack gear 715 are configured so that worm gears 731 mesh with the rack gear 715 to converge the vice members 732 by rotating each of the two clamping handles 734. The two vice members 732, when closing in toward each other, pinch the fence crossbar at the recess 711 and thereby secure the present ship's draft monitoring apparatus 10 onto the fence of the ship.

An additional rack gear 715 may be disposed in the support bracket 710 at its opposite side wall along with an additional pair of second fasteners 730. Then, the attachment 700b includes two rack gears 715 and two pairs of second fasteners 730. However, the numbers of rack gears 715 and the second fasteners 730 are not limited thereto.

The camera 100 may include a fisheye lens. The camera can capture a panoramic image by using the fisheye lens. A user may receive the panoramic image transmitted to observe the draft with virtual reality goggles. With the fisheye lens capable of photographing panoramic images, one can obtain images close to the actual object. Observation through the virtual reality goggles rather than a flat panel monitor mitigates the typical risk of distorting those panoramic images. Then, a more accurate draft of the ship can be observed.

The ship's draft monitoring apparatus 10 according to some embodiments may further include an automatic draft monitoring unit.

The automatic draft monitoring unit may perform the steps of identifying letters or numbers by using the camera, recognizing intervals between the numbers by using the camera, recognizing waves by using the camera, and automatically calculating a draft value at a moment when no waves are detected.

Although exemplary embodiments of the present disclosure have been described for illustrative purposes, those skilled in the art will appreciate that various modifications, additions and substitutions are possible, without departing from the various characteristics of the disclosure. Therefore, exemplary embodiments of the present disclosure have been described for the sake of brevity and clarity. Accordingly, one of ordinary skill would understand the scope of the disclosure is not limited by the explicitly described above embodiments but by the claims and equivalents thereof.

## Claims

1. An apparatus for monitoring a draft of a ship, comprising:
a camera;
a descent arm configured to have an adjustably extending multi-stage telescopic structure and have an end coupled with the camera;
a descent adjuster configured to adjust an elevation of the camera; and
a wire configured to link the descent arm with the descent adjuster, wherein an extension of the descent arm and the elevation of the camera are adjusted according to a length of the wire, the length being varied by the descent adjuster.

2. The apparatus of claim 1, wherein the descent arm comprises a plurality of hollow tubes configured to have different diameters, with a smaller hollow tube sliding inside of an adjacent larger hollow tube, wherein each of the hollow tubes has outer peripheral step at one end and an an inner peripheral step at the other end for securing the hollow tubes within a working range.

3. The apparatus of claim 1, further comprising a tailpiece being coupled to an outer peripheral surface of the descent arm, the tailpiece having openings at both ends each anchoring an end of the wire.

4. The apparatus of claim 1 or 2, wherein the descent arm has a circular cross-section with at least one truncated edge.

5. The apparatus of claim 1, further comprising a bridge configured to have one side rotatably coupled with the descent arm and have an adjustably extending multi-stage telescopic structure.

6. The apparatus of claim 1, further comprising
a bridge joined in an articulated manner to the descent arm; and
an attachment configured to fix the bridge on the ship for preventing a camera shake.

7. The apparatus of claim 6, wherein the attachment comprises:
a support bracket configured to wrap over and slide relative to the bridge;
a first fastener configured to secure the support bracket to the bridge; and
a second fastener configured to fixate the support bracket to a fence on a deck of the ship.

8. The apparatus of claim 7, further comprising a rack gear being disposed inside the support bracket,
wherein the second fastener comprises:
a worm gear having teeth engaging with the rack gear,
a shaft combined with the worm gear and exposed out of the bridge,
a clamping handle coupled to the shaft, and
a vice member, interposed between the worm gear and the clamping handle, protruding downwardly of the bridge; and
wherein the vice member is positionally adjusted by a manipulation of the clamping handle.

9. The apparatus of claim 1, wherein the camera is configured to
capture a panoramic image by using a fisheye lens; and
transmit the panoramic image for a user to observe the draft with virtual reality goggles.

10. The apparatus of claim 1, further comprising:
an automatic draft monitoring unit which performs the steps of:
identifying letters or numbers by using the camera;
recognizing intervals between the numbers by using the camera;
recognizing waves by using the camera; and
automatically calculating a draft value at a moment when no waves are detected.
